# DEMANDE DE BREVET EUROPEEN

(11) **EP 3 499 424 A1**
(43) Date de publication de la demande: **19.06.2019**
(21) Numéro de dépôt: 17306778.6
(22) Date de dépôt: 14.12.2017
(51) Int. Cl.: G06K 19/077

(54) **PROCEDE DE FABRICATION D'UNE CARTE A PUCE COMPORTANT DU BOIS**

(71) Demandeur: GEMALTO SA, 92190 Meudon (FR)
(72) Inventeur: KODJAGUEUZIAN, Gilles, 13881 GEMENOS Cedex (FR); KARAFOTIS, Stéphane, 13881 GEMENOS Cedex (FR)

(57) **Abrégé**

L'invention concerne un procédé de fabrication d'une carte à puce (10A, 11A) comprenant un corps (17) de carte comportant des feuilles en bois (5B, 6B), ledit procédé comprenant les étapes de :
-fourniture de deux feuilles en bois (5B, 6B) doublées sur leur face interne d'un film polymère substrat et/ou d'assemblage (2,2b), la surface externe des feuilles étant libre à l'extérieur,
- fourniture d'un insert (1) comportant du métal (3), en feuille(s) ou lame(s),
- insertion de l'insert (1) entre lesdites feuilles (5B, 6B), avant assemblage de l'ensemble, les faces externes des feuilles en bois étant orientées vers l'extérieur et recouvrant en majeure partie les deux surfaces principales du corps (17) de carte.

L'invention concerne également une carte correspondante obtenue par le procédé.

## Description

### Domaine de l'invention.

L'invention concerne le domaine des cartes à puce comportant des matériaux divers tels que du bois, du métal et/ou du plastique.

Les cartes à puce peuvent avoir ou non une fonction radiofréquence et être du type à contacts et/ou sans contact.

Elles peuvent comprendre une antenne pour la communication radiofréquence placée dans le corps de carte et/ou dans le module. Le module est généralement encarté dans une cavité du corps de carte. Un module radiofréquence peut connecter une antenne logée dans le corps de carte via des éléments d'interconnexion électriques, reliant des plages terminales de l'antenne à des zones de connexion de la puce placées sur le module.

Elles peuvent avoir un module comportant un transpondeur radiofréquence avec la puce et l'antenne portées sur un substrat du module. Le module radiofréquence peut être couplé avec une antenne passive logée dans le corps de carte.

L'invention vise plus particulièrement les cartes bancaires.

### Art antérieur

On assiste actuellement à une demande accrue du public pour des cartes en matière naturelle telle que le bois ou comportant des couches ou feuilles en bois notamment pour des raisons écologiques.

Il est connu de fabriquer des cartes à puce ayant une feuille de coeur en bois et comportant des feuilles de protection en plastique transparent externe recouvrant le coeur en bois.

Il est connu également d'avoir des cartes entièrement en bois mais leur tenue mécanique n'est pas stable avec le temps et/ou la température et/ou hygrométrie ambiante.

Par ailleurs, il existe des cartes bancaires comportant des éléments métalliques en insert à l'intérieur du corps de carte en matière plastique ou en surface externe du corps de carte tel de l'aluminium, du titane, de l'or.

Le métal procure une sensation de lourdeur de la carte qui est très appréciée par les utilisateurs. Il donne aussi un aspect esthétique visible qui en fait un produit haut de gamme pour privilégiés.

Il y a donc actuellement une forte demande pour ce genre de carte à puce intégrant des matières nobles et /ou écologiques naturelles.

Toutefois, les procédés connus de fabrication de carte « écologique » ne donnent pas entière satisfaction soit vis-à-vis de la tenue mécanique et/ou vieillissement, et/ou de l'aspect.

### Problème technique.

L'invention vise à résoudre les inconvénients précités.

L'invention a pour objectif un procédé de fabrication de cartes écologiques ayant des matériaux naturels et/ou nobles et qui soit compatible avec des cadences et contraintes industrielles.

La carte doit également avoir de préférence une structure satisfaisant les standards ISO de contraintes de tenues mécaniques et de durabilité dans le temps. Concernant les tests de flexion/torsion, ils peuvent être non conformes au standard des cartes à puce mais proches le plus possible.

### Résumé de l'invention.

L'invention propose un procédé de fabrication de cartes à puce ayant du bois en surface externe de la carte pour avoir la sensation inégalable du bois et l'aspect visuel du bois sur toutes les faces ou les côtés de la carte.

Elle propose également d'y associer un insert métallique comportant du métal disposé au coeur du corps de carte. L'insert métallique a l'avantage de conférer une rigidité et une tenue mécanique de la carte en bois.

La combinaison des deux matériaux (métal et bois) tels que le propose l'invention permet d'obtenir des résultats très satisfaisants en termes de tenue mécanique.

Le métal permet également d'alourdir la carte raisonnablement et le bois confère un toucher de surface naturel inégalé propre au bois.
La densité relativement faible et légèreté du bois sont compensées par une densité beaucoup plus élevée du métal.

De même, la fragilité relative du bois à la flexion est compensée par la capacité de rigidité du métal.

L'invention propose une optimisation dans la combinaison du bois et du métal dans un corps de carte. Elle permet de déterminer le choix du bois, son épaisseur ainsi que le choix du métal et de son épaisseur.

Elle propose également un procédé permettant une fabrication industrielle compatible avec la combinaison envisagée des matériaux de composition de la carte ainsi trouvée.

A cet effet, l'invention a pour objet un procédé de fabrication d'une carte à puce comprenant un corps de carte comportant des feuilles en bois, ledit procédé comprenant les étapes de :
- fourniture de deux feuilles en bois doublées / revêtues sur leur face interne d'un film polymère substrat et/ou d'assemblage, la surface externe des feuilles étant libre à l'extérieur,
- fourniture d'un insert comportant du métal, en feuille(s) ou lame(s),
- insertion de l'insert entre lesdites feuilles, avant assemblage de l'ensemble, les faces externes des feuilles en bois étant orientées vers l'extérieur et recouvrant en majeure partie les deux surfaces principales du corps de carte.

Selon d'autres caractéristiques :
- Le procédé comprend une étape d'impression sur la tranche (T) du corps de carte d'un motif graphique imitant l'aspect réel du bois ;
- L'impression peut être réalisée par technique de jet de matière ou de jet d'encre ;
- L'impression (14) peut être effectuée uniquement sur une zone centrale de la tranche (T) ou (toute la tranche) de manière à recouvrir au moins les matériaux distincts du bois, situés à l'interface entre les deux feuilles en bois sur toute le surface de la tranche ; Cela permet d'améliorer l'adhésion des couches entre elles;
- Le procédé comprend une étape de réalisation d'un évidement dans l'insert, ledit évidement correspondant à un emplacement de module complet de carte à puce ;
- Le procédé comprend une étape de réalisation d'une antenne autour du métal de l'insert métallique ;
- L'antenne est une antenne passive couplée par induction à une antenne de module ;
- Le procédé comprend une étape de traitement de surface du bois conservant l'aspect et le toucher du bois telle qu'une application de cire naturelle ou synthétique, un traitement hydrofuge.

L'invention a également pour objet une carte à puce comprenant :
- un corps de carte,
- deux feuilles en bois externes recouvrant en majeure partie les deux surfaces principales de la carte, chaque feuille en bois étant doublée sur sa face interne d'un film polymère substrat et/ou d'assemblage, la surface externe des feuilles étant libre à l'extérieur,
- un insert entre les feuilles de bois, ledit insert comportant du métal. Le métal peut se présenter sous différentes formes notamment en feuille(s) ou lame(s ;

Selon d'autres caractéristiques :
- La carte comprend une impression sur la tranche (T) du corps de carte d'un motif graphique imitant l'aspect du bois ;
- L'impression est effectuée au moins sur une matière distincte des feuilles en bois située à leur interface ;
- La carte comprend une antenne passive disposée autour de l'insert métallique et autour d'un emplacement de module radiofréquence, ledit module radiofréquence (M) étant couplé par induction à ladite antenne passive.

### Descriptif des figures :

- Les figures 1 à 3 illustrent des étapes du procédé de l'invention selon un mode de mise en oeuvre préféré ;
- La figure 2 illustre l'assemblage de la carte à l'aide de coupes longitudinales des sous-ensembles de corps de carte réalisées sensiblement au niveau de la coupe A-A de la figure 1 ;
- Les figures 4 à 7 illustrent des étapes du procédé de l'invention selon un second mode de mise en oeuvre préféré ;
- La figure 8 illustre une étape d'impression / masquage de la tranche de la carte obtenue.

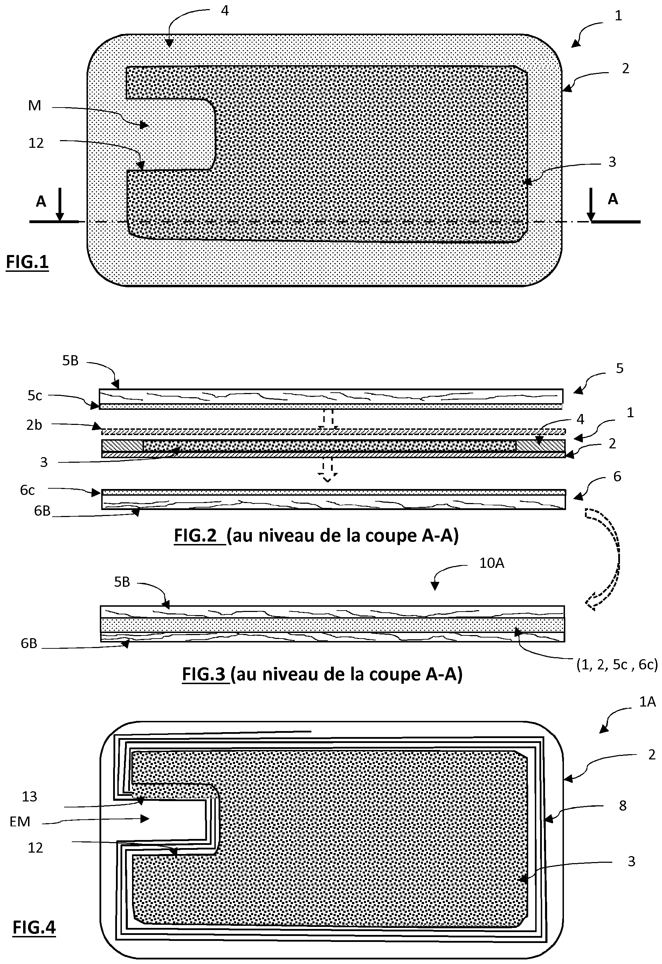

A la figure 1, est illustrée une première étape du procédé de fabrication d'une carte à puce comprenant un corps de carte comportant des feuilles en bois.
Selon cette première étape, l'invention prévoit la fourniture d'un insert comportant du métal.
Le métal peut être sous différentes formes notamment en feuille(s) ou lame(s) de métal assemblées ou superposées. Sous forme de fils métallique, granulés, billes, poudre de métal dans une matrice polymère,
Dans l'exemple, une feuille de métal 3 est fixée sur un substrat fin isolant 2. La feuille est ici en acier d'épaisseur comprise entre 200µm et 400µm et le substrat est sous forme matière plastique d'épaisseur variant entre 200 et 400µm.

Le substrat fin peut être aux dimensions de la carte ou de préférence légèrement inférieur de quelques millimètres (ex. 3 à 10 mm) sur toute sa périphérie.

La partie métallique 3 peut comporter ou présenter, de préférence, une découpe latérale (ou échancrure 12 concave sur un des bords latéraux du métal)). L'échancrure correspond à un emplacement de module radiofréquence complet ou à une cavité complète (ex. plans P1 et P2 de cavité) de réception d'un module radiofréquence. Le module peut être à contacts électriques affleurant en surface du corps de carte. Il peut être de type hybride (contacts et radiofréquence ou simplement radiofréquence. La découpe permet ainsi soit de faciliter l'usinage de la cavité de réception du module soit d'éviter des perturbations dans la propagation de champ électromagnétique. Le métal peut faire écran aux ondes électromagnétiques d'un module radiofréquence couplé avec une antenne passive s'étendant dans le corps de carte. Alternativement, l'emplacement du module correspond sensiblement à un évidement (ou perforation) de l'inlay en métal 3.

Inversement, l'inlay métallique 3 peut être en acier doux ou autre matière ayant des propriétés magnétiques adaptées de manière réaliser une fonction de noyau électromagnétique améliorant / canalisant les champs électromagnétiques captées / émis par l'antenne principale 8.

L'inlay (insert) métal 3 s'étend de préférence sensiblement autour ou en périphérie du module (ou au moins sur 3 côtés à 90 degrés du module). Cela permet notamment de couvrir le maximum de surface du corps de carte et apporter un maximum de poids. L'inlay s'étend de préférence au plus près, à droite du module sur la figure 1 ou 4 puis au-dessus et en dessous du module ou son emplacement.

De préférence, des spires d'une antenne de module de carte à puce demeurent sensiblement à l'intérieur de l'évidement / ouverture 12 ; Elles ne chevauchent pas ou ne sont pas à l'aplomb du bord de l'évidement ou de l'ouverture 12, ni à l'aplomb du métal 3.
L'insert 1 comprend une ouverture 12 traversante dans le métal et correspondant à l'emplacement du module complet.

Le module radiofréquence de carte à puce (non représenté) comprend de manière connue, par exemple, une puce radiofréquence et une antenne de communication reliée à la puce disposée sur un substrat diélectrique.

Après le report du métal sur le substrat 3, l'insert peut être surmoulé de matière plastique 4 pour combler la périphérie du métal ou recevoir un cadre en polymère ou une résine ou un cadre ou entretoise en bois entourant le métal 3 de manière à présenter une surface plane supérieure. L'épaisseur finale du cadre 4 peut être sensiblement celle du métal.
Le cas échéant, l'insert peut recevoir une feuille de recouvrement 2b par-dessus sur la face du métal opposée à celle recevant le substrat 2.

Le cas échéant, le métal peut ne pas comprendre de substrat (ou feuilles de recouvrement) 2 (ni de feuille 2b par-dessus le métal 3) pour des raisons d'épaisseur ; Il peut être réalisé avec un cadre tout autour du métal notamment par surmoulage ou coulage de résine à froid ou à chaud dans un moule aux dimensions correspondantes à celles d'une carte à puce, la feuille du métal étant positionnée au centre du moule.

Le métal peut comprendre des perforations ou des ouvertures (traversantes ou non) pour accrocher les feuilles de recouvrement entres elles et éviter une délamination. Le métal peut être sous forme de grille ou de feuille perforée de préférence partout ou au moins en périphérie pour mieux lier les feuilles de recouvrement.
De préférence, le métal (plus petit que le format carte) est posé dans une entretoise plastique. L'ensemble est recouvert de part et d'autre par deux couches de matière plastique encollées de façon à souder l'ensemble.

Selon une autre étape, le procédé prévoit une fourniture de deux feuilles de bois doublées sur leur face interne d'un film polymère substrat et/ou d'assemblage.

Les feuilles de bois avec un film polymère forment un complexe ou composite bois / polymère et ont une épaisseur par exemple de 200 µm au total. La feuille (ou film) polymère peut être notamment en tout matériau plastique notamment à base de polychlorure de vinyle (PVC), d'un polyéthylène téréphtalate (PET), d'un polycarbonate (PC), d'un polyéthylène téréphtalate glycol (PETG), d'un acrylonitrile butadiène styrène (ABS). Il est ici en PVC pour faciliter l'assemblage par lamination avec l'inlay qui comprend de préférence des feuilles de recouvrement supérieure et inférieure de

Les feuilles peuvent être au format standard des cartes à puce environ 54 X 86 mm. Alternativement, les feuilles en bois (ou complexes) peuvent être traitées sous forme de plaques avec plusieurs emplacements de cartes et être découpées ensuite au format final de carte à puce après lamination de l'ensemble.

Des inlays avec une âme ou coeur en métal (sans découpe 12) peuvent être fournis notamment par les sociétés Smartrac ou Xcore. Ils peuvent se présenter sous forme de feuille de métal entourée d'un cadre et recouvert de feuille polymère sur chaque face principale de la feuille métal. Les feuilles de recouvrement de l'inlay métallique peuvent être en PVC comme dans l'exemple. Les inlays dans l'exemple ont environ 400 µm d'épaisseur. L'invention peut ou pas ajouter l'ouverture 12 en fonction du mode de réalisation retenu.

Selon le mode préféré, le procédé comprend une étape d'insertion de l'insert 1 (fig. 2) entre les feuilles de bois 5B (ou complexe 5), avant assemblage de l'ensemble (1, 5, 6) les faces externes des feuilles en bois étant orientées vers l'extérieur et recouvrant en majeure partie les deux surfaces principales du corps de carte.

De préférence, le procédé prévoit une préparation des complexes 5, 6 pour faciliter l'assemblage ultérieur de l'ensemble 1, 5, 6 et/ou pour également stabiliser /renforcer les feuilles de bois 5B, 6B. Les feuilles polymères peuvent comprendre une phase thermoadhésive et/ou une phase thermodurcissable de manière qu'après lamination à chaud, l'ensemble ne soit plus démontable par apport thermique.
Le cas échéant, si l'inlay comporte des feuilles de recouvrement, les feuilles polymères du complexe 5 ou 6 peuvent de pas être nécessaires.

Le résultat de l'assemblage, (apparaissant sur la figure 2), est une carte 10A (non à l'échelle) qui comprend au centre l'inlay 1 partiellement enfoncé dans les feuilles polymères d'assemblage 5c, 6c et/ou 2 et 2b.
Le cas échéant, les feuilles en bois seules et inserts (avec ou sans feuilles recouvrement / d'assemblage) peuvent être assemblées avec un adhésif enduit sur leur surface d'assemblage.

Les figures 4-6, illustrent un second mode préféré de mise en oeuvre de l'invention. Ce second mode diffère du premier en ce qu'il comporte une antenne 13 sur le substrat 2, tout autour de la partie en métal 3.

Toutes les variantes ou alternatives visées au premier mode peuvent s'appliquer à ce second mode. En particulier, la feuille ou film 2b

De préférence, on réalise l'antenne par tout procédé connu tel que gravure de cuivre, incrustation de fil, jet de matière, etc. sur le substrat 2. Alternativement, l'antenne est réalisée sur le cadre 4 par les mêmes techniques susvisées.
Alternativement, les antennes 8 peuvent être réalisées sur l'une et/ou l'autre feuille ou film d'assemblage (5c, 6c, 2, 2b) de l'ensemble notamment en PVC de préférence avant leur assemblage avec le métal pour former l'inlay 1 ou avec les feuilles en bois.

L'antenne 8 est ici dans l'exemple une antenne passive ou relais (d'amplification de portée) sans connexion ohmique ave une puce radiofréquence.

Toutefois, dans le cadre d'un module radiofréquence connecté électriquement à une antenne classique, l'antenne peut comporter des plages d'interconnexion ou des zigzags filaires (non représentés) dans la zone ou emplacement EM de module radiofréquence. Ces plages sont accessibles dans une cavité réalisée à cet emplacement. Les spires ou fils d'antenne peuvent être de préférence recouverte d'un gainage isolant électriquement.

La découpe ou évidement 12 de la feuille métallique peut également permettre d'éviter un court-circuit des plages d'interconnexion de l'antenne avec le métal 3.

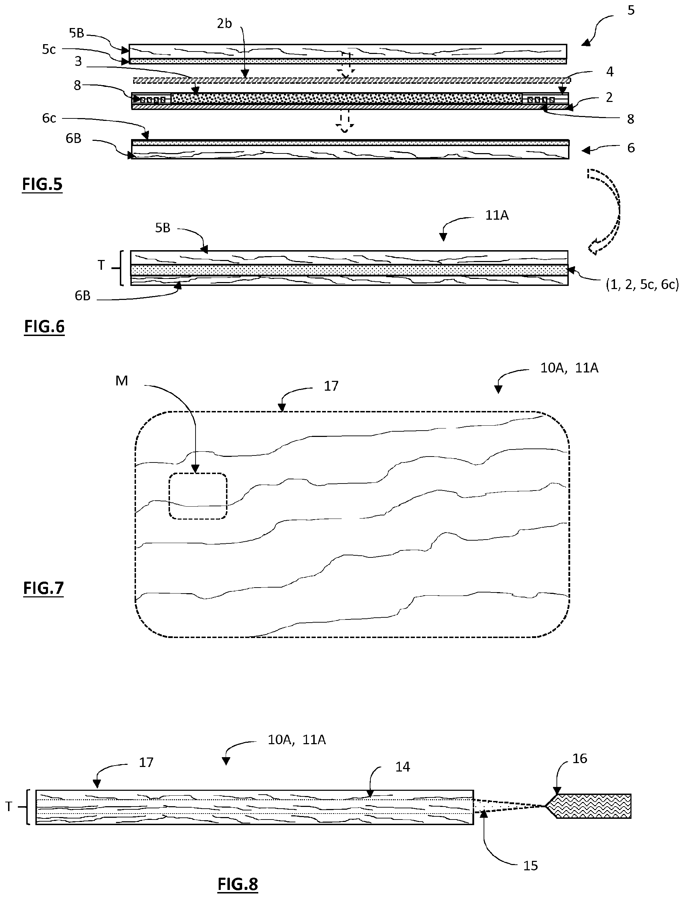

A la figure 7, est illustrée la carte obtenue en vue de dessus soit de la figure 3 soit de la figure 6.
La carte a l'avantage de présenter l'aspect et le toucher du bois en surface.
Elle peut comprendre tout module de carte à puce visé précédemment à l'emplacement M. Alternativement, l'emplacement d'un module radiofréquence M peut être dans les renfoncements de l'antenne orientés vers l'extérieur tels que ceux situées au-dessus ou en dessous de l'emplacement EM. Le métal peut être omis dans la zone correspondante des renfoncements comme pour l'emplacement EM.

Selon une caractéristique, le mode préféré peut comprendre une étape d'impression sur la tranche du corps de carte d'un motif graphique imitant l'aspect du bois.

L'impression 14 sur la tranche T permet de mieux lier les différentes couches entre elles et ainsi une meilleure tenue des couches à l'encontre d'un risque de la délamination sur les tranches et/ou dans les coins de la carte.

En outre, l'impression masque l'interface de l'assemblage entre les feuilles en bois 5B, 6B. L'impression 14 permet d'imiter le véritable aspect du bois par une reproduction à l'identique d'une photographie de la tranche en bois de la carte.
L'impression 14 peut être réalisée de préférence par technique de jet 15 de matière ou de jet d'encre notamment à l'aide d'une imprimante 16. D'autres techniques d'impression sont possibles (sérigraphie, etc.).

L'impression peut être effectuée uniquement sur une zone centrale de la tranche de manière à recouvrir au moins l'inlay 1 et la matière polymère d'assemblage existant sur la tranche de la carte comprenant par exemple les films ou feuilles 5c, 6c et/ou 2, 2b. L'impression peut être effectuée de manière à recouvrir au moins les matériaux distincts du bois et situés à l'interface entre les deux feuilles en bois.

Ainsi, le procédé permet d'obtenir une carte à puce 10, 10A comprenant, un corps de carte (1, 5B, 6B...) comprenant deux feuilles de bois externes 5B, 6B recouvrant en majeure partie les deux surfaces principales de la carte (mais de préférence toute la surface disponible ; La surface externe des feuilles en bois est de préférence libre de couches ou de revêtement à l'extérieur. La surface externe des feuilles est de préférence exempte de couche de vernis ou de couche qui dénature le toucher ou l'aspect naturel du bois à l'exception d'un traitement qui imprègne le bois en profondeur et demeure en profondeur par rapport à la surface du bois.

Selon un mode de réalisation alternatif, les surfaces externes de la carte peuvent comprendre:
- sur le verso une couche de protection plastique permettant la mise en place de piste magnétique ainsi que d'éléments de personnalisation tels qu'hologramme, pavé de signature...
- sur le recto, de la carte, la surface externe du bois est exempte de couche supplémentaire de façon à conserver la texture, le toucher et l'odeur du bois. Ainsi, sur le recto au moins, l'invention permet de ne rien couvrir à l'exception d'une impression de données (notamment par jet d'encre). Au pire, on peut rajouter du vernis simplement sur les zones imprimées de façon à les protéger. Toutes les zones non imprimées restent intactes pour ne pas altérer le toucher, l'odeur et la texture du bois.

Par contre, il est préféré un traitement du bois en surface qui pénètre à l'intérieur du bois et ne change pas son toucher tel qu'une cire ou d'imperméabilisant.

Chaque feuille de bois peut être doublé (ou revêtue) sur sa face interne (orienté vers le coeur de la carte) d'un film polymère substrat et/ou d'assemblage 2, 2b, 5c, 6c. Le cas échéant, le film peut être un adhésif sous forme de film ou de couche d'enduction.

La carte comprend également un insert 1 entre les feuilles de bois ; L'insert 1 insert comporte du métal 3, en forme de feuille(s), lame(s), granulés, billes, grille, etc.

Le métal peut être apporté de différentes manières notamment assemblé à un polymère substrat et/ou d'assemblage.
Le métal peut comprendre du titane, de l'acier, du cuivre, du plomb, de l'or et différents alliages, etc.

De préférence, la tranche T du corps 17 de carte 10A, 11A comporte un motif graphique imitant une surface réelle de carte en bois. Le cas échéant, une autre impression tel qu'un vernis peut être pulvérisée / appliqué sur le bois et/ou la tranche T. Le bois peut également simplement être poli et/ou patiné et /ou ciré pour avoir un aspect naturel. La cire peut être naturelle ou synthétique.

De préférence, le bois est choisi parmi des essences suivantes, merisier, chêne, hêtre, peuplier, bois exotique, ébène, teck, santal, camphrier, etc.

Le traitement de finition du bois ci-dessus peut intervenir de préférence après personnalisation / marquage graphique de la carte.

Le bois peut être préalablement imprégné d'une essence ou parfum, huile essentielle ou recevoir tout traitement connu de l'homme de l'art (traitement hydrofuge, etc.)

Dans le carte d'une impression par jet de matière, jet d'encre, la carte l'impression présente ou est constituée de points (taches) d'encre projetée sur la tranche T, par les buses de jet de matière ou de jet d'encre, et superposés/ juxtaposés les uns sur les autres. Les points peuvent avoir par exemple une résolution supérieure à environ 600 DPI.

Le cas échant, un vernis extrêmement fin épousant les aspérités de surface et dont l'épaisseur est inférieure aux aspérités de surface telles que des crevasses ou excroissances s'étendant vers l'extérieur (par exemple de profondeur ou hauteur inférieure à 20 µm voire 10 ou 5 µm par rapport au niveau général médian de la surface de la feuille de bois) peut être imprimé en surface des feuilles en bois par jet d'encre. Le vernis peut être polymérisé par UV.

L'impression peut être effectuée uniquement sur la matière polymère d'assemblage et/ou de substrat, existant sur la tranche de la carte. L'impression forme ainsi une bande 14 centrale entourant tout le bord (tranche) de la carte et dont la largeur peut être comprise par exemple entre 400 µm et 760 µm de préférence entre 500 et 600 µm.

## Revendications

1. Procédé de fabrication d'une carte à puce (10A, 11A) comprenant un corps (17) de carte comportant des feuilles en bois (5B, 6B), ledit procédé comprenant les étapes de :
- fourniture de deux feuilles en bois (5B, 6B) doublées sur leur face interne d'un film polymère substrat et/ou d'assemblage (2,2b), la surface externe des feuilles étant libre à l'extérieur,
- fourniture d'un insert (1) comportant du métal (3), en feuille(s) ou lame(s),
- insertion de l'insert (1) entre lesdites feuilles (5B, 6B), avant assemblage de l'ensemble, les faces externes des feuilles en bois étant orientées vers l'extérieur et recouvrant en majeure partie les deux surfaces principales du corps (17) de carte.

2. Procédé selon la revendication précédente, **caractérisé en ce qu'**il comprend une étape d'impression (15) sur la tranche (T) du corps (17) de carte d'un motif graphique (14) imitant l'aspect du bois.

3. Procédé selon la revendication précédente, **caractérisé en ce que** ladite impression (14) est réalisée par technique de jet de matière ou de jet d'encre (15).

4. Procédé selon la revendication 2 et 3, **caractérisé en ce que** l'impression (14) est effectuée uniquement sur une zone centrale de la tranche (T) de manière à recouvrir au moins les matériaux distincts du bois, situés à l'interface entre les deux feuilles en bois.

5. Procédé selon l'une des revendications précédentes, **caractérisé en ce qu'**il comprend une étape de réalisation d'un évidement (12) dans l'insert (1), ledit évidement correspondant à un emplacement (EM) de module complet (M) de carte à puce.

6. Procédé selon l'une des revendications précédente, **caractérisé en ce qu'**il comprend une étape de réalisation d'une antenne (8) autour du métal (3) de l'insert métallique (1) .

7. Procédé selon la revendication précédente, **caractérisé en ce qu'**il ladite antenne (8) est une antenne passive couplée par induction à une antenne de module (M).

8. Procédé selon la revendication précédente, **caractérisé en ce qu'**il comprend une étape de traitement de surface du bois conservant l'aspect et le toucher du bois telle qu'une application de cire naturelle ou synthétique, un traitement hydrofuge.

9. Carte à puce (10A, 11A) comprenant :
- un corps de carte (17),
- deux feuilles en bois externes (5B, 6B) recouvrant en majeure partie les deux surfaces principales de la carte, chaque feuille en bois étant revêtue sur sa face interne d'un film ou couche polymère substrat et/ou d'assemblage (2, 2b), la surface externe des feuilles étant libre à l'extérieur,
- un insert (1) entre les feuilles de bois, ledit insert comportant du métal (3) en feuille(s) ou lame(s.

10. Carte selon la revendication précédente, **caractérisée en ce que** le métal (3) est assemblé à une feuille polymère substrat et/ou d'assemblage (2, 2b).

11. Carte selon la revendication précédente, **caractérisée en ce qu'**il comprend une impression (14) sur la tranche (T) du corps (17) de carte d'un motif graphique (14) imitant l'aspect du bois.

12. Carte selon la revendication précédente, **caractérisée en ce que** l'impression (14) comprend des points de jet de matière ou de jet d'encre (15).

13. Carte selon la revendication précédente, **caractérisée en ce que** l'impression (14) est effectuée au moins sur une matière distincte des feuilles en bois située à leur interface.

14. Carte selon l'une des revendications 8 à 12, **caractérisée en ce qu'**il comprend une antenne passive (8) disposée autour de l'insert métallique (3) et autour d'un emplacement de module radiofréquence, ledit module radiofréquence (M) étant couplé par induction à ladite antenne passive.
